# EUROPEAN PATENT SPECIFICATION

(11) **EP 0 811 179 B1**
(45) Date of publication and mention of the grant of the patent: **01.03.2006**
(21) Application number: 96937469.3
(22) Date of filing: 26.11.1996
(51) Int. Cl.: G02F 1/133, G09F 9/35, G09G 3/36

(54) **LIQUID CRYSTAL DISPLAY DEVICE**
FLÜSSIGKRISTALLANZEIGEVORRICHTUNG
DISPOSITIF D'AFFICHAGE A CRISTAUX LIQUIDES

(30) Priority: 15.12.1995 EP 95203503
(43) Date of publication of application: 10.12.1997
(73) Proprietor: Koninklijke Philips Electronics N.V., 5621 BA Eindhoven (NL)
(72) Inventor: HENZEN, Alexander, Victor, NL-5656 AA Eindhoven (NL)
(74) Representative: van der Veer, Johannis Leendert
(86) International application number: PCT/IB1996/001302
(87) International publication number: WO 1997/022903

(56) References cited:
- US-A- 4 045 791
- US-A- 4 902 107
- US-A- 4 917 469

## Description

The invention relates to a liquid crystal display device according to the introductory part of a claim 1.

Display devices of this type are generally known, e.g. from USP 4.045.791, and are used, for example in display screens for alphanumerical display devices in, for example, computer apparatus and measuring apparatus, but also in car radios and telephone apparatus.

The use of such display devices may give rise to problems at a varying ambient temperature, because values which are characteristic of the liquid crystal, such as threshold voltage and saturation voltage, are dependent on temperature. To be able to use these display devices in a large temperature range, the drive frequency may be adapted in dependence upon the temperature, as described, for example, for a dynamic scattering effect, in USP 4.045.791. However, the temperature frequency dependence in this device is determined empirically, so no direct relation exists between the frequency to be used when temperature changes and a liquid crystal parameter.

USP 4.902.107 shows the driving of ferro-electric displays in which alternating fields are applied in parallel to selection or signal pulses; the frequency of these auxiliary alternating fields is changed when temperature changes.

It is an object of the invention to provide a display device, notably based on the STN effect (twist angles between 160° and 360°) having a high multiplex degree through a wide range of temperatures.

To this end, a liquid crystal display device according to the invention is characterized according to the characterizing part of claim 1.

The invention is based on the recognition that, notably upon a decrease of temperature, the threshold voltage (and hence the other characteristic voltages of the display elements) strongly increase with the frequency, while much lower drive frequencies can be used at these lower temperatures. This particularly applies to said liquid crystal materials having a low threshold voltage (Vₜₕ < 2 Volts ∼, particularly < 1,8 Volts). The relevant frequency control does not necessarily have to work for a full range of temperatures but may be limited to, for example, a range of temperatures below 20°C.

A preferred embodiment of a display device is characterized in that the drive means comprise means for decreasing the frequency at which pixels are driven when the temperature decreases, and for increasing the frequency when the temperature increases. The frequency adaptation is not necessarily continuous but may be performed in steps. In that case, the drive means are provided, for example, with an oscillator and a plurality of frequency dividers which adjust the frequency in dependence on the temperature value supplied by a temperature sensor.

A further preferred embodiment is characterized in that the drive means are provided with means for increasing the duration of row selection times when the frequency at which the rows are selected is decreased, and for decreasing the duration of row selection times when the frequency at which the rows are selected is increased. Notably in the RMS drive mode, it is then achieved that the effective voltage across the pixels can be applied at lower data and selection voltages.

These and other aspects of the invention will be apparent from and elucidated with reference to the embodiments described hereinafter.

### In the drawings:

Fig. 1 is a diagrammatic cross-section of a part of the display device, together with a diagrammatic representation of the drive section,
Fig. 2 shows the dependence of the temperature and the frequency on the value V₅₀, while
Figs. 3 to 5 show diagrammatically a plurality of drive pulses, and
Fig. 6 shows the realization of a part of the drive section of Fig. 1.

The Figures are diagrammatic and not to scale. Corresponding elements are generally denoted by the same reference numerals.

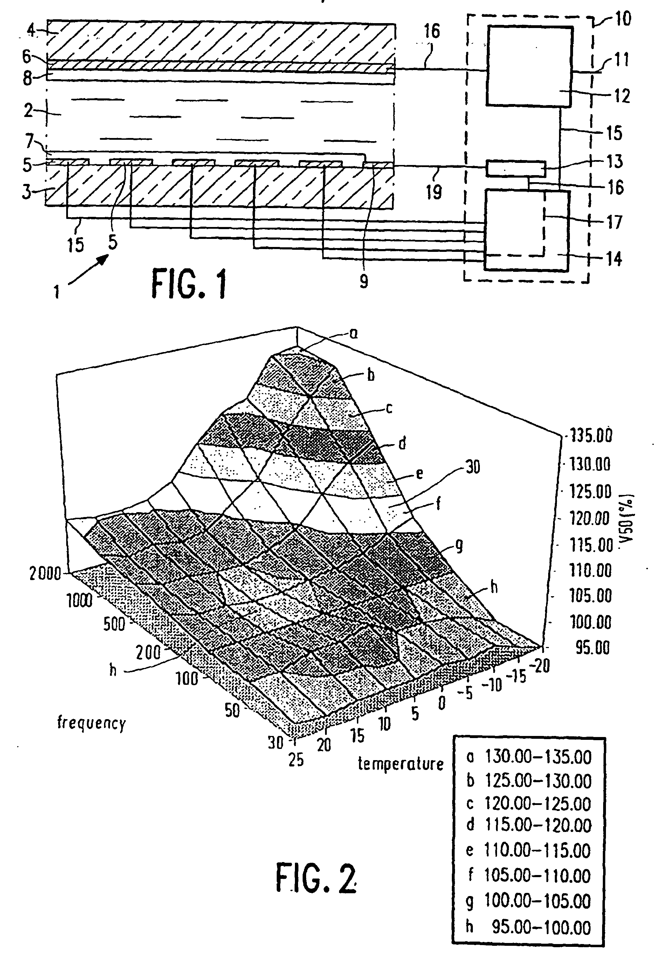

Fig. 1 is a diagrammatic cross-section of a part of a liquid crystal display device comprising a liquid crystal cell 1 with a twisted nematic liquid crystal material 2 which is present between two supporting plates or substrates 3 and 4 of, for example, glass or quartz, provided with selection electrodes 5 and data electrodes 6, respectively, in this embodiment. In this case, the liquid crystal material (for example, MLC 3700 of the firm of Merck) has a positive optical anisotropy and a positive dielectric anisotropy and a low threshold voltage. If necessary, the device comprises polarizers (not shown) whose polarization directions are, for example, mutually crossed perpendicularly. The device further comprises orientation layers 7, 8 which orient the liquid crystal material on the inner walls of the substrates in such a way that the twist angle is, for example, 240°. The picture display device is of the passive type, but it may also be provided with active switching elements which connect picture electrodes to drive electrodes. The cell also comprises a temperature sensor 9 shown diagrammatically, for example, a temperature-sensitive resistor which is connected via signal lines 19 to a part 13 of the drive section 10 denoted by means of broken lines.

Incoming information 11 is processed if necessary, in the drive section 10 and stored in a data register 12 and presented to the data electrodes 6 via data signal lines 16. Pixels, here arranged in rows and columns, are selected by successively selecting row electrodes 5 which are connected to a multiplex circuit 14 via row signal lines 15. The mutual synchronization between the multiplex circuit 14 and the data register 12 is ensured by the line 15. After all rows electrodes have been selected, this selection is repeated; this is effected at the frame frequency.

Fig. 2 shows values of the deviation of V₅₀ as a function of temperature and frequency for the device of Fig. 1 with respect to the value at 25°C and 100 Hz. Here, V₅₀ is the voltage value at which the transmission is 50% of the maximum transmission; this value is directly coupled to other characteristic values such as the threshold voltage or the saturation voltage in the transmission/voltage characteristic of the display device. In an example with a multiplex ratio of 1:32 (i.e. 32 selection lines) and a frame frequency of 70 Hz, the repetition frequency at a pixel is 32*70 Hz = 2240 Hz, or at the more conventional drive with DC compensation, it is half this value, namely 1120 Hz.

Fig. 2 shows that this is near the region 30, in which V₅₀ deviates by more than 5% from the value at 25°C and 100 Hz. Fig. 2 also shows that the increase of V₅₀ is unacceptable at lower temperatures (at said 1120 Hz). To ensure a satisfactory operation at lower temperatures (notably at -20°C) (i.e. V₅₀ deviates by less than 5% from the value at 25°C and 100 Hz), the repetition frequency at a pixel should be lower than approximately 150 Hz, which corresponds to a frame frequency of approximately 9.4 Hz. Due to flicker, the latter value is unacceptable at room temperature but is quite suitable at lower temperature. At lower temperatures, the liquid crystal liquid is more viscous so that a pixel will switch more slowly, and also in this case the repetition time is much shorter than the response time of the liquid crystal material so that, also at this low temperature, there is no flicker.

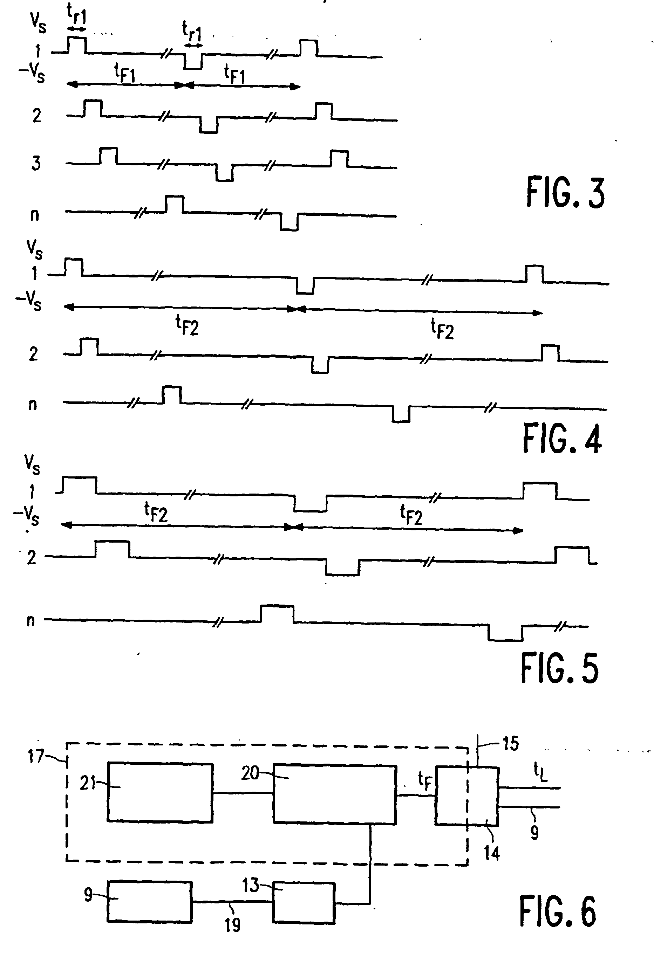

Figs. 3 to 5 show row selection signals at room temperature (Fig. 3) and a lower temperature (for example, 0°C or lower), respectively, for a passive display device using 1:n multiplexing. The rows 1, 2, 3 ..., n are successively selected by means of row selection pulses having a pulse width tᵣ₁ and a voltage V₅. The frame time t_{F1} is thus n.tᵣ₁ (at 25°C and 100 Hz); in a subsequent frame time, the pixels are driven with inverted data and row signals. The frequency of the signal at the pixel is thus 1/(2.t_{F1}). As described above, it is sufficient to use a lower frequency at lower temperatures, in this example 1/(2.t_{F2}). The same pulse patterns as in Fig. 3 may be chosen for the row selection pulses in this case, while no row is selected during a period (t_{F2}-t_{F1}). Since the RMS voltage is decisive for driving, which voltage is also influenced by the duration of the row selection pulses, such a pulse width tᵣ₂ is preferably chosen for the row selection pulses that the frame time t_{F2} is about n.tᵣ₂. Due to the longer row selection times, the selection voltages do not need to be changed or hardly need to be changed with respect to those at 25°C and 100 Hz. At large temperature fluctuations (for example, over 25°C) a small adaptation of the selection voltage may be necessary, because other values determining the threshold voltage may also be temperature-dependent (for example, the visco-elastic constant).

Fig. 6 shows diagrammatically the structure of a part of the drive section 10. The signal line 19 connected to the temperature sensor 9 is connected via an A/D converter or directly to a frequency selection circuit or frequency divider 20. Dependent on the measured temperature, which may also be measured elsewhere, for example, outside the actual display (or whose value is directly introduced), the frequency from a main oscillator 21 is divided in such a way that the multiplex circuit 14 applies row signals to the row electrodes 9 with row selection pulses of the optimum pulse width tᵣ₂ at the relevant temperature, at a frame time t_{F2}. Simultaneously, the data register 12 is controlled via the line 18 in such a way that data signals are (synchronously) presented to the data electrodes, also at pulse width tᵣ₂.

In summary, the invention relates to a liquid crystal display device (particularly having a low threshold voltage) provided with means for compensating the temperature dependence of characteristic voltages of the display device by adapting the frequency at which pixels are driven. The voltages to be used then do not need to be adapted or hardly need to be adapted, notably, if they are determined once for the highest occurring drive frequency (which generally occurs at the highest operating temperature).

The invention is not only applicable to the display devices having a passive or active drive as described above, but other addressing methods are alternatively possible, for example, plasma addressing or optical addressing, at which the addressing frequency can be varied.

## Claims

1. A liquid crystal display device comprising a first substrate (3) which is provided with electrodes (5), and a second substrate (4) which is parallel to the first substrate and is provided with electrodes (6), and a nematic liquid crystal material (2) between the two substrates, wherein, viewed perpendicularly to the substrates, overlapping parts of the electrodes define pixels, the display device being further provided with drive means (10) arranged to apply voltages to the electrodes with means for controlling the frequency at which pixels are driven, dependent on the temperature of the display device,
**characterized in that** the nematic liquid crystal material is twisted liquid crystal material having a positive dielectric anisotropy and **in that** the drive means is arranged to apply a root mean square voltage to the electrodes to drive the pixels.

2. A liquid crystal display device as claimed in Claim 1, **characterized in that** the drive means comprise means arranged to decrease the frequency at which pixels are driven when the temperature decreases, and to increase said frequency when the temperature increases.

3. A liquid crystal display device as claimed in Claim 1 or 2, **characterized in that** the pixels are divided into rows and columns and the drive means are provided with means arranged to decrease the frequency at which the rows are selected when the temperature decreases, and to increase said frequency when the temperature increases.

4. A liquid crystal display device as claimed in Claim 3, **characterized in that** the pixels are defined by overlapping portions of column and row electrodes.

5. A liquid crystal display device as claimed in Claim 3 or 4, **characterized in that** the drive means are provided with means arranged to increase the duration of row selection times when the frequency at which the rows are selected is decreased, and to decrease the duration of row selection times when the frequency at which the rows are selected is increased.

6. A liquid crystal display device as claimed in Claim 2, 3, 4 or 5, **characterized in that** the drive means are provided with an oscillator (21) and at least a frequency divider (20) which is arranged to adjust the frequency in dependence upon the temperature value supplied by a temperature sensor.

## Patentansprüche

1. Flüssigkristallanzeigeeinrichtung mit einem ersten Substrat (3), das mit Elektroden (5) versehen ist, und einem zweiten Substrat (4), das parallel zum ersten Substrat steht und mit Elektroden (6) versehen ist, und einem nematischen Flüssigkristallmaterial (2) zwischen den zwei Substraten, bei dem, senkrecht zu den Substraten gesehen, überlappende Teile der Elektroden Pixels definieren, wobei die Anzeigeeinrichtung darüber hinaus mit Ansteuerungsmitteln (10) versehen ist, die ausgebildet sind, mit Mitteln zum Regeln der Frequenz, mit der Pixel angesteuert werden, in Abhängigkeit von der Temperatur der Anzeigeeinrichtung, Spannungen an die Elektroden anzulegen,
**dadurch gekennzeichnet, dass** das nematische Flüssigkristallmaterial verdrehtes nematisches Flüssigkristallmaterial mit positiver Anisotropie ist und dass die Ansteuerungsmittel angeordnet sind, an die Elektroden eine Effektivspannung anzulegen, um die Pixel anzusteuern.

2. Flüssigkristallanzeigeeinrichtung nach Anspruch 1, **dadurch gekennzeichnet, dass** die Ansteuerungsmittel Mittel umfassen, die angeordnet sind, die Frequenz, bei der die Pixels angesteuert werden, zu erniedrigen, wenn die Temperatur abnimmt, und die genannte Frequenz zu erhöhen, wenn die Temperatur zunimmt.

3. Flüssigkristallanzeigeeinrichtung nach Anspruch 1 oder 2, **dadurch gekennzeichnet, dass** die Pixel in Zeilen und Spalten unterteilt und die Ansteuerungsmittel mit Mitteln versehen werden, die angeordnet sind, die Frequenz, mit der die Zeilen selektiert werden, zu erniedrigen, wenn die Temperatur abnimmt, und die genannte Frequenz zu erhöhen, wenn die Temperatur zunimmt.

4. Flüssigkristallanzeigeeinrichtung nach Anspruch 3, **dadurch gekennzeichnet, dass** die Pixel durch überlappende Abschnitte von Spalten- und Zeilenelektroden definiert werden.

5. Flüssigkristallanzeigeeinrichtung nach Anspruch 3 oder 4, **dadurch gekennzeichnet, dass** die Ansteuerungsmittel mit Mitteln versehen sind, die angeordnet sind, die Dauer von Zeilenselektionszeiten zu verlängern, wenn die Frequenz, bei der die Zeilen selektiert werden, abgenommen hat, und die Dauer von Zeilenselektionszeiten zu verkürzen, wenn die Frequenz, bei der die Zeilen selektiert werden, zugenommen hat.

6. Flüssigkristallanzeigeeinrichtung nach Anspruch 2, 3, 4 oder 5, **dadurch gekennzeichnet, dass** die Ansteuerungsmittel mit einem Oszillator (21) und zumindest einem Frequenzteiler (20) versehen sind, der angeordnet ist, die Frequenz in Abhängigkeit von dem von einem Temperatursensor gelieferten Temperaturwert einzustellen.

## Revendications

1. Dispositif d'affichage à cristaux liquides comprenant un premier substrat (3) qui est muni d'électrodes (5), et un deuxième substrat (4) qui est parallèle par rapport au premier substrat et qui est muni d'électrodes (6), et un matériau cristallin liquide nématique (2) prévu entre les deux substrats, dans lequel, vu de façon perpendiculaire par rapport aux substrats, des parties chevauchantes des électrodes définissent des éléments d'image, dispositif qui est en outre muni de moyens de commande (10) disposés pour appliquer des tensions aux électrodes à l'aide moyens pour la commande de la fréquence à laquelle sont commandés les éléments d'image, suivant la température du dispositif d'affichage, **caractérisé en ce que** le matériau cristallin liquide nématique est constitué par un matériau cristallin liquide tordu présentant une anisotropie diélectrique positive et **en ce que** le moyen de commande est disposé pour appliquer une tension efficace aux électrodes afin de commander les éléments d'image.

2. Dispositif d'affichage à cristaux liquides selon la revendication 1, **caractérisé en ce que** les moyens de commande comprennent des moyens disposés pour diminuer la fréquence à laquelle sont commandés les éléments d'image lorsque la température diminue et pour augmenter ladite fréquence lorsque la température augmente.

3. Dispositif d'affichage à cristaux liquides selon la revendication 1 ou 2, **caractérisé en ce que** les éléments d'image sont divisés en rangées et colonnes et les moyens de commande sont munis de moyens disposés pour diminuer la fréquence à laquelle sont sélectionnées les rangées lorsque la température diminue et pour augmenter ladite fréquence lorsque la température augmente.

4. Dispositif d'affichage à cristaux liquides selon la revendication 3, **caractérisé en ce que** les éléments d'image sont définis par chevauchement de parties d'électrodes de colonnes et de rangées.

5. Dispositif d'affichage à cristaux liquides selon la revendication 3 ou 4, **caractérisé en ce que** les moyens de commande sont munis de moyens disposés pour augmenter la durée des temps de sélection de rangées lorsque la fréquence à laquelle sont sélectionnées les rangées est diminuée, et pour diminuer la durée des temps de sélection de rangées lorsque la fréquence à laquelle sont sélectionnées les rangées est augmentée.

6. Dispositif d'affichage à cristaux liquides selon la revendication 2, 3 4 ou 5, **caractérisé en ce que** les moyens de commande sont munis d'un oscillateur (21) et d'au moins un diviseur de fréquence (20) qui est disposé pour établir la fréquence en dépendance de la valeur de la température fournie par un capteur de température.
